# EUROPÄISCHE PATENTSCHRIFT

(11) **EP 3 746 258 B1**
(45) Veröffentlichungstag und Bekanntmachung des Hinweises auf die Patenterteilung: **02.03.2022**
(21) Anmeldenummer: 19703052.1
(22) Anmeldetag: 31.01.2019
(51) Int. Cl.: B23K 26/14

(54) **GASZUFUHRVORRICHTUNG SOWIE LASERBEARBEITUNGSKOPF MIT DERSELBEN**
GAS SUPPLY DEVICE AND LASER PROCESSING HEAD COMPRISING SAME
DISPOSITIF D'ALIMENTATION EN GAZ AINSI QUE TÊTE D'USINAGE LASER DOTÉE D'UN DISPOSITIF D'ALIMENTATION EN GAZ

(30) Priorität: 02.02.2018 DE 102018102337
(43) Veröffentlichungstag der Anmeldung: 09.12.2020
(73) Patentinhaber: Precitec GmbH & Co. KG, 76571 Gaggenau-Bad Rotenfels (DE)
(72) Erfinder: OPITZ, Florian, 79341 Kenzingen (DE); LOOSE, Christian, 76571 Gaggenau (DE)
(74) Vertreter: Ter Meer Steinmeister & Partner
(86) Internationale Anmeldenummer: PCT/EP2019/052379
(87) Internationale Veröffentlichungsnummer: WO 2019/149819

(56) Entgegenhaltungen:
- EP-A2- 0 695 600
- EP-A2- 1 016 493
- DE-A1- 3 637 568
- GB-A- 2 163 692
- US-A- 4 467 171

## Beschreibung

Die vorliegende Offenbarung betrifft eine Gaszufuhrvorrichtung und einen Laserbearbeitungskopf mit derselben, wie beispielsweise einen Laserbearbeitungskopf zum Laserschneiden. Die vorliegende Offenbarung betrifft insbesondere eine Gasführung zum Laserschneiden eines Werkstücks.

### Stand der Technik

In einer Vorrichtung zur Materialbearbeitung mittels Laser, z.B. in einem Laserbearbeitungskopf etwa zum Laserschweißen oder Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimatoroptik und einer Fokussierungsoptik verwendet, wobei das Laserlicht über eine Lichtleitfaser zugeführt wird.

Beim Schneiden metallischer Materialien mittels Laserstrahlung tritt üblicherweise gemeinsam mit dem Laserstrahl eine Gasströmung aus dem Bearbeitungskopf aus. Zu diesem Zweck ist am Bearbeitungskopf eine Schneiddüse angebracht, durch die Laserstrahlung und Schneidgas auf ein zu bearbeitendes Werkstück gerichtet werden. Im Schneidprozess erfüllt das Schneidgas verschiedene Aufgaben. Zum einen unterstützt es durch die Übertragung von Druck- und Scherkräften an der Schnittfront und an den Schnittflanken den Austrieb des aufgeschmolzenen Materials aus der Schnittfuge. Diese Funktion des Schneidgases dominiert beim Schneiden von Edelstahl, weshalb in diesem Anwendungsfall ein inertes Medium (üblicherweise Stickstoff N₂) verwendet wird. Beim Schneiden von Baustahl hingegen wird ein reaktives Gas verwendet (üblicherweise Sauerstoff O₂). Das Schneidgas unterstützt in diesem Anwendungsfall den Trennvorgang, indem es die Umsetzung von Eisen zu Eisenoxid ermöglicht. Auf diese Weise wird neben der Laserstrahlung zusätzlich Reaktionswärme in den Prozess eingebracht. Daneben bleibt auch beim Baustahlschnitt die Funktion des Schmelzaustriebs erhalten. Als dritte Aufgabe verhindert das Schneidgas eine Verschmutzung des letzten optischen Elementes im Bearbeitungskopf, indem Prozessemissionen durch Impulsübertrag abgelenkt werden.

Für die oben genannten Funktionen des Schneidgases - vor allem der Schmelzaustrieb und die Oxidationsreaktion - ist es von Vorteil, wenn Strömungsgrößen beim Austritt aus der Schneiddüse möglichst homogen und symmetrisch über den Strömungsquerschnitt verteilt sind. Die Gleichverteilung der Strömungsgrößen gewinnt mit der Bearbeitung zunehmender Blechstärken (*s* > 10 mm) und dem Einsatz zunehmender Laserleistungen (*P* > 4 kW) an Bedeutung für das Prozessergebnis. Eine möglichst gleichmäßige Verteilung der Strömungsgrößen verbessert die Oberflächenqualität und Rechtwinkligkeit der resultierenden Schnittkanten und ermöglicht höhere Schnittgeschwindigkeiten.

Die US 4 467 171 A , die die Basis für den Oberbegriff von Anspruch 1 bildet, beschreibt eine Laserschneiddüse für eine Laserschneidvorrichtung, die einen fokussierten Strahl auf einen Punkt auf einem Werkstück richtet. Die Düse hat einen zylindrischen Körper mit einer konischen Spitze, die einen konisch geformten hohlen Innenraum aufweist. Eine Vielzahl von Gaseinlasslöchern erstreckt sich durch den Körper zu dem hohlen Innenraum, so dass eine Gas-Wirbelströmung koaxial durch die Düse zu erzeugt und durch eine Öffnung an der konischen Spitze auf das Werkstück gerichtet wird. Die EP 0 695 600 A2 beschreibt einen Laserbearbeitungskopf, der einen Gasverteiler zum Einführen von Gas neben einer innerhalb des Gehäuses gehaltenen Fokussierlinse umfasst. Der Gasverteiler besteht aus einer Vielzahl von gewinkelten Verteilungsschlitzen, die eine Gas-Wirbelströmung erzeugen, die von der Fläche der Linse weg und in Richtung des Düsenauslasses gerichtet ist.

US 4,467,171 A bezieht sich auf eine Laserschneiddüse zur Verwendung mit einer Laserschneidvorrichtung, die einen fokussierten Strahl auf einen Punkt auf einem Werkstück richtet. Die Düse hat einen zylindrischen Körper mit einer konischen Spitze, die zusammen einen konisch geformten hohlen Innenraum mit der Spitze an einer kleinen Öffnung durch die Spitze haben. Das konische hohle Innere ist so geformt, dass es dem Profil des Laserstrahls bei voller Strahlbreite entspricht, der durch die Düse zum Werkstück gelangt. Eine Vielzahl von Gaseinlasslöchern erstrecken sich durch den Körper zum hohlen Innenraum und sind so ausgerichtet, dass sie einen wirbelnden Gasstrom koaxial durch die Düse und aus der mit dem Laserstrahl ausgerichteten Öffnung zum Werkstück erzeugen.

EP 0 695 600 A2 bezieht sich auf einen verbesserten Laserbearbeitungskopf, der ein Gehäuse, eine im Gehäuse montierte Linsenhalterdüse und einen Gasverteiler zum Einleiten von Gas neben einer im Gehäuse zurückgehaltenen Fokussierlinse umfasst, um die Linse zu kühlen und zu verhindern, dass die Linse durch abgetragenes Material kontaminiert oder das Werkstück beschädigt wird. Der Gasverteiler besteht aus mehreren abgewinkelten Verteilungsschlitzen, die eine Wirbelgasströmungswirkung erzeugen, die von der Fläche der Linse weg und in Richtung des Düsenauslasses gerichtet ist.

### Offenbarung der Erfindung

Es ist eine Aufgabe der vorliegenden Offenbarung, eine Gaszufuhrvorrichtung für einen Bearbeitungskopf sowie einen Bearbeitungskopf mit derselben, insbesondere einen Laserbearbeitungskopf zum Laserschneiden bereitzustellen, wobei eine verbesserte Oberflächenqualität und Rechtwinkligkeit der Schnittkanten und höhere Schnittgeschwindigkeit erzielt wird.

Diese Aufgabe wird durch den Gegenstand des unabhängigen Anspruchs gelöst. Vorteilhafte Ausgestaltungen der Erfindung sind in den Unteransprüchen angegeben.

Gemäß Ausführungsformen der vorliegenden Offenbarung umfasst eine Gaszufuhrvorrichtung für einen Laserbearbeitungskopf zum Erzeugen eines homogenen Gasstroms einen Gaseinlass, ein gemeinsames Volumen zum Überlagern eines Laserstrahls und des Gasstroms, und ein Gaskanalsystem, das sich ausgehend vom Gaseinlass mindestens zweimal verzweigt und den Gaseinlass mit mehreren, z.B. mit mindestens drei, Auslassöffnungen am gemeinsamen Volumen verbindet. Mit anderen Worten weist das Gaskanalsystem mindestens zwei Verzweigungspunkte, die hintereinander entlang des Strömungswegs vom Gaseinlass zum gemeinsamen Volumen liegen, und mindestens drei Gaskanäle auf, die den Gaseinlass mit jeweils mindestens einer Auslassöffnung verbinden. Das Gassystem kann mindestens einen Verzweigungspunkt aufweisen, an dem der den Verzweigungspunkt durchströmende Gasstrom je hälftig auf zwei nachfolgende Gaskanäle aufgeteilt wird. Alternativ oder zusätzlich kann das Gaskanalsystem mindestens einen Verzweigungspunkt aufweisen, an dem der Gasstrom auf mindestens drei Gaskanäle gleichmäßig aufgeteilt wird.

Gemäß weiteren Ausführungsformen der vorliegenden Offenbarung umfasst eine Gaszufuhrvorrichtung für einen Laserbearbeitungskopf zum Erzeugen eines homogenen

Gasstroms einen Gaseinlass, ein gemeinsames Volumen zum Überlagern eines Laserstrahls und des Gasstroms, und ein Gaskanalsystem, das sich ausgehend vom Gaseinlass in mindestens drei Gaskanäle verzweigt, die den Gaseinlass mit jeweils mindestens einer Auslassöffnung am gemeinsamen Volumen verbinden. Die Gaskanäle können so eingerichtet sein, dass sie gleichmäßig mit dem Gasstrom beaufschlagt werden. Vorzugsweise erfolgt die Aufteilung in dem Gaskanalsystem derart, dass zwischen dem Gaseinlass und jeder Auslassöffnung am gemeinsamen Volumen gleich viele Verzweigungspunkte liegen. Besonders bevorzugt ist, dass sich an Verzweigungspunkten, die um die gleiche Anzahl von Verzweigungspunkten vom Gaseinlass beabstandet sind, die gleiche Anzahl an Gaskanälen verzweigen.

Beispielsweise kann ein erster Gaskanal, der mit dem Gaseinlass verbunden ist, an einem ersten Verzweigungspunkt in zwei zweite (nachfolgende) Gaskanäle aufgeteilt sein, und die zweiten Gaskanäle können an einem zweiten Verzweigungspunkt jeweils in zwei dritte Gaskanäle aufgeteilt sein. Die dritten Gaskanäle können mit je einer Auslassöffnung verbunden sein. Alternativ können die dritten Gaskanäle an weiteren Verzweigungspunkten mindestens ein weiteres Mal hälftig verzweigt werden.

Eine Kanalstrecke bzw. Kanallänge oder eine Weglänge kann vom Gaseinlass zu jeder Auslassöffnung im Wesentlichen gleich lang sein.

Vorzugsweise sind die Gaskanäle stromabwärts von dem mindestens einen Verzweigungspunkt voneinander getrennt bzw. nicht miteinander verbunden. Somit wird das durch den Gaseinlass eingeführte Gas in mehrere Gaskanäle aufgeteilt und erst wieder im gemeinsamen Volumen zusammengeführt. Hier können die Gaskanäle den Gaseinlass mit jeweils genau einer Auslassöffnung am gemeinsamen Volumen verbinden. Alternativ können die Gaskanäle bereits vor dem gemeinsamen Volumen zusammengeführt werden, beispielsweise kann zwischen dieser Stelle der Zusammenführung und dem gemeinsamen Volumen zusätzlich ein Element zur Gleichrichtung der Strömung vorgesehen werden.

Das Gaskanalsystem und die Auslassöffnungen können eingerichtet sein, um einen im Wesentlichen homogenen Gasstrom im und/oder aus dem gemeinsamen Volumen bereitzustellen. Durch das verzweigte Gaskanalsystem und mehrere Auslassöffnungen am gemeinsamen Volumen kann ein Gasstrom mit homogener und über einen Strömungsquerschnitt symmetrischer Verteilung von wichtigen Strömungsgrößen bereitgestellt werden, wodurch Funktionen des Gases, wie etwa Schmelzaustrieb und Oxidation beim Laserschneiden, und dadurch auch eine Bearbeitungsqualität verbessert werden. Die Auslassöffnungen können an einem Umfangsbereich des gemeinsamen Volumens angeordnet sein. Die Auslassöffnungen können symmetrisch am gemeinsamen Volumen bzw. an einem Umfang des gemeinsamen Volumens angeordnet sein. Durch eine symmetrische Anordnung der Auslassöffnungen an einem Umfang des gemeinsamen Volumens kann der Gasstrom zusätzlich homogenisiert werden. Die Gaszufuhrvorrichtung kann eingerichtet sein, den Gasstrom und den Laserstrahl koaxial zu überlagern und durch die Austrittsöffnung austreten zu lassen.

Die Gaszufuhrvorrichtung kann ferner eine Austrittsöffnung an einem ersten Ende des gemeinsamen Volumens zum Bereitstellen des homogenen Gasstroms aufweisen. Die Gaszufuhrvorrichtung kann an einem zweiten Ende des gemeinsamen Volumens, das der Austrittsöffnung gegenüberliegt, Befestigungsmittel zum Befestigen der Gaszufuhrvorrichtung an einem Laserbearbeitungskopf umfassen. Die Gaszufuhrvorrichtung kann auch im Laserbearbeitungskopf integriert bzw. ein Teil desselben sein. Beispielsweise kann das Gaskanalsystem in einem Laserbearbeitungskopf bzw. in mindestens einem Element des Laserbearbeitungskopfes als Bohrungen ausgebildet sein. Dadurch können Vibrationen und auch die Außendimensionen des Laserbearbeitungskopfes reduziert werden.

Vorzugsweise ist das Gaskanalsystem bzw. die Auslassöffnungen dazu eingerichtet, dass der durch jede Auslassöffnung strömende Gasstrahl einen Winkel zwischen 0° und 90° zu einer Symmetrieachse des gemeinsamen Volumens bildet, die mittig durch die Austrittsöffnung der Gaszufuhrvorrichtung führt. Hierbei kann der durch jede Auslassöffnung strömende Gasstrahl von der Austrittsöffnung der Gaszufuhrvorrichtung weg gerichtet sein. Mit anderen Worten kann der durch jede Auslassöffnung strömende Gasstrahl in Richtung eines (zweiten) Endes des gemeinsamen Volumens gerichtet sein, das der Austrittsöffnung gegenüberliegt.

Die Gaszufuhrvorrichtung kann eine Mittelebene aufweisen, wobei zumindest ein Abschnitt oder ein Teil des Gaskanalsystems, und vorzugsweise das gesamte Gaskanalsystem, symmetrisch zur Mittelebene ist. Die Mittelebene kann im Wesentlichen parallel zu einer optischen Achse des Laserbearbeitungskopfes sein. Die optische Achse kann in der Mittelebene verlaufen. Die Mittelebene kann die optische Achse umfassen und sich mittig durch den Gaseinlass erstrecken. Beispielsweise kann die Mittelebene eine Symmetrieebene des gemeinsamen Volumens sein. Die Mittelebene kann sich vom ersten Ende des gemeinsamen Volumens zum zweiten Ende des gemeinsamen Volumens erstrecken.

Des Weiteren kann eine Verzweigung des Gaskanalsystems zur Mittelebene an einem zugehörigen Verzweigungspunkt symmetrisch sein. Beispielsweise kann sich das Gaskanalsystem an jedem Verzweigungspunkt in zwei Kanäle aufspalten. Mit anderen Worten kann das Gaskanalsystem dazu eingerichtet sein, den Gasstrom an einem Verzweigungspunkt symmetrisch oder hälftig aufzuteilen. In einem Beispiel kann das Gaskanalsystem zur Mittelebene eines ersten Verzweigungspunkts symmetrisch sein. Das bedeutet, dass das gesamte Gaskanalsystem eine Symmetrieebene durch den ersten Verzweigungspunkt aufweist.

Das Gaskanalsystem kann wenigstens eine Staukammer, die wenigstens ein Stauvolumen bereitstellt, umfassen. Die Staukammer kann ringförmig ausgebildet sein. Die Staukammer kann das gemeinsame Volumen umgeben bzw. um das gemeinsame Volumen umlaufend ausgebildet sein. Vorzugsweise ist die Staukammer bzw. das Stauvolumen zwischen den Gaskanälen und den Auslassöffnungen am gemeinsamen Volumen angeordnet. Mit anderen Worten können die Gaskanäle des Gaskanalsystems in ein Stauvolumen münden. Eine Kanallänge der Gaskanäle oder eine Weglänge vom Gaseinlass zum Stauvolumen kann für alle Gaskanäle gleich sein.

Das Gaskanalsystem kann wenigstens ein Gleichrichterelement umfassen. Das Gleichrichterelement kann so angeordnet sein, dass der Gasstrom vom Gaskanalsystem und/oder vom Stauvolumen über das Gleichrichterelement in das gemeinsame Volumen geführt wird. Mit anderen Worten kann das Gleichrichterelement zwischen dem Gaskanalsystem und dem gemeinsamen Volumen bzw. den Auslassöffnungen am gemeinsamen Volumen, oder zwischen der Staukammer und dem gemeinsamen Volumen bzw. den Auslassöffnungen am gemeinsamen Volumen, angeordnet sein. Wenn das Gleichrichterelement zwischen dem Gaskanalsystem und den Auslassöffnungen am gemeinsamen Volumen oder zwischen dem Stauvolumen und den Auslassöffnungen am gemeinsamen Volumen angeordnet ist, kann eine Kanallänge der Gaskanäle oder eine Weglänge vom Gaseinlass zum Gleichrichterelement für alle Gaskanäle gleich sein.

Das Gleichrichterelement kann aus der Gruppe ausgewählt sein, die Rohrbündel, Siebe, Lamellen, Wabenelemente und Beruhigungsstrecken, o.ä. umfasst. Beispielsweise kann das Gleichrichterelement eine Vielzahl symmetrisch um den Umfang des gemeinsamen Volumens verteilter Beruhigungsstrecken umfassen. Eine Anzahl der Beruhigungsstrecken kann zwischen 4 und 24 oder zwischen 8 und 16 liegen und/oder die Beruhigungsstrecken können ein Verhältnis D/L von Streckendurchmesser D zu Streckenlänge L zwischen 0,05 und 0,3 oder zwischen 0,1 und 0,3 aufweisen.

Die Auslassöffnungen können einen im Wesentlichen kreisförmigen, ovalen oder länglichen Querschnitt aufweisen.

Der Gaseinlass kann der einzige Gaseinlass zum Gaskanalsystem sein. Ein einziger Gaseinlass ist für einen Benutzer leichter anzuschließen und zu handhaben. Außerdem ist so nur eine Anschlussleitung zur Verbindung mit einer Gasquelle notwendig, sodass auf eine große Anzahl von Anschlussleitungen verzichtet werden kann. Dies ist insbesondere für bewegliche Laserbearbeitungsköpfe vorteilhaft. Ebenso kann hierdurch sichergestellt werden, dass das Anschließen des Bearbeitungskopfes an die Gasquelle keinen negativen Einfluss auf die Homogenität der Gasströmung im gemeinsamen Volumen hat, da bei nur einer Anschlussleitung hydraulische Unterschiede zwischen den Zuleitung aufgrund unterschiedlicher Längen, Durchmesser oder unterschiedlichen Verlegewegen ausgeschlossen sind. Sollten mehrere Gaseinlässe vorhanden sein, so ist jeder Gaseinlass über mindestens drei Gaskanäle mit je einer Auslassöffnung verbunden. Das zu jedem Gaseinlass zugeordnete Gaskanalsystem kann mindestens einen Verzweigungspunkt, an dem sich mindestens drei Gaskanäle abzweigen, oder mindestens zwei Verzweigungspunkte, an denen sich jeweils zwei Gaskanäle abzweigen, umfassen.

Das Gaskanalsystem und die Auslassöffnungen können eingerichtet sein, um eine im Wesentlichen gleichmäßige Verteilung einer oder mehrerer Strömungsgrößen des im gemeinsamen Volumen strömenden Gases und/oder des aus dem gemeinsamen Volumen ausströmenden Gases bereitzustellen. Die eine oder die mehreren Strömungsgrößen können aus der Gruppe ausgewählt sein, die u.a. eine Strömungsgeschwindigkeit, eine Strömungsrichtung, einen statischen Druck und eine Gasdichte umfasst.

Die Gaszufuhrvorrichtung kann so ausgelegt sein, dass eine optische Achse des Laserbearbeitungskopfes und eine Achse des Gasstromes im gemeinsamen Volumen im Wesentlichen koaxial überlagert sind.

Die Gaszufuhrvorrichtung ist vorzugsweise eine Gaszufuhrvorrichtung zum Zuführen von Schneidgas. Mit anderen Worten kann es sich bei dem Gasstrom insbesondere um Schneidgas handeln.

Ferner ist ein Laserbearbeitungskopf angegeben, der eine Laservorrichtung zum Bereitstellen eines Laserstrahls und eine Gaszufuhrvorrichtung zum Erzeugen eines homogenen Gasstroms nach einem der hier beschriebenen Ausführungsbeispiele umfasst.

Der Laserbearbeitungskopf kann weiter ein optisches Element umfassen, wie beispielsweise eine Fokussieroptik oder ein Schutzglas. Das gemeinsame Volumen kann direkt im Anschluss an das optische Element angeordnet sein bzw. daran angrenzen. Der Laserbearbeitungskopf kann ferner eine Düse mit einer Düsenöffnung umfassen, die derart eingerichtet ist, dass ein Laserstrahl und ein Gasstrahl durch die Düsenöffnung auf ein Werkstück gerichtet werden können. Insbesondere kann das optische Element ein letztes optisches Element im Strahlengang des Laserstrahls sein.

Gemäß weiteren Ausführungsformen der vorliegenden Offenbarung ist ein Verfahren zur Laserbearbeitung angegeben. Das Verfahren umfasst ein Einleiten eines Gasstroms in einen Gaseinlass, ein Aufteilen des Gasstroms in einem Gaskanalsystem mit mindestens zwei Verzweigungen, ein Zuführen des Gases aus dem Gaskanalsystem zu einem gemeinsamen Volumen, und ein Überlagern eines Laserstrahls mit dem zugeführten Gasstrom im gemeinsamen Volumen.

Gemäß der vorliegenden Offenbarung kann durch das verzweigte Gaskanalsystem eine im Wesentlichen homogene und symmetrische Gaszufuhr zum gemeinsamen Volumen bereitgestellt werden. Die erfindungsgemäße Gaszufuhrvorrichtung kann insbesondere eine gleichmäßige Verteilung wichtiger Strömungsgrößen an der Austrittsöffnung bereitstellen. Durch das erfindungsgemäße verzweigte Gaskanalsystem kann eine verbesserte Oberflächenqualität und Rechtwinkligkeit der Schnittkanten sowie eine höhere Schnittgeschwindigkeit ermöglicht werden.

### Kurze Beschreibung der Zeichnungen

Ausführungsbeispiele der Offenbarung sind in den Figuren dargestellt und werden im Folgenden näher beschrieben. Es zeigen:
Figur 1 eine schematische Darstellung eines Laserbearbeitungskopfs mit einer darin integrierten Gaszufuhrvorrichtung gemäß Ausführungsformen der vorliegenden Offenbarung,
Figur 2 ein Prinzip der Ausbildung des Gaskanalsystems einer Gaszufuhrvorrichtung gemäß Ausführungsformen der vorliegenden Offenbarung,
Figur 3 ein Gaskanalsystem einer Gaszufuhrvorrichtung gemäß Ausführungsformen der vorliegenden Offenbarung,
Figur 4 ein Gaskanalsystem einer Gaszufuhrvorrichtung gemäß weiteren Ausführungsformen der vorliegenden Offenbarung,
Figur 5 ein Gaskanalsystem einer Gaszufuhrvorrichtung gemäß noch weiteren Ausführungsformen der vorliegenden Offenbarung,
Figuren 6A und B simulierte Geschwindigkeitsverteilungen im gemeinsamen Volumen, und
Figuren 7A und B simulierte Geschwindigkeitsverteilungen in einer horizontalen Schnittebene am Düsenauslass.

### Ausführungsformen der Offenbarung

Im Folgenden werden, sofern nicht anders vermerkt, für gleiche und gleichwirkende Elemente gleiche Bezugszeichen verwendet.

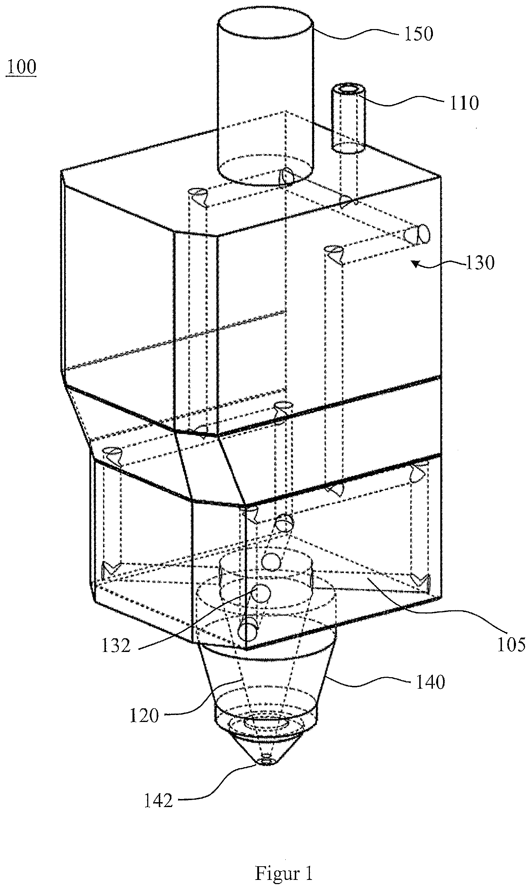

Figur 1 zeigt eine Gaszufuhrvorrichtung für einen Laserbearbeitungskopf zum Erzeugen eines homogenen Gasstroms gemäß Ausführungsformen der vorliegenden Offenbarung. In der gezeigten Ausführungsform ist die Gaszufuhrvorrichtung im Laserbearbeitungskopf 100 integriert oder ein Teil desselben. In anderen Ausführungsformen kann die Gaszufuhrvorrichtung an einem unteren Teil bzw. einer Spitze des Laserbearbeitungskopfes 100, z.B. zum Laserschneiden, befestigt sein.

Die Gaszufuhrvorrichtung 100 für einen Laserbearbeitungskopf zum Erzeugen eines homogenen Gasstroms umfasst einen Gaseinlass 110 (z.B. ein Pneumatikfitting), ein gemeinsames Volumen 120 zum Überlagern eines Laserstrahls und eines Gasstroms, und ein Gaskanalsystem 130, das sich ausgehend vom Gaseinlass 110 mindestens zweimal verzweigt und den Gaseinlass 110 über mehrere Gaskanäle 105 mit jeweils einer Auslassöffnung 132 an einem gemeinsamen Volumen verbindet. Das Gaskanalsystem 130 und die Auslassöffnungen 132 sind eingerichtet, um einen im Wesentlichen homogenen Gasstrom im bzw. aus dem gemeinsamen Volumen bereitzustellen.

Eine möglichst gleichmäßige Verteilung wichtiger Strömungsgrößen am Austritt setzt voraus, dass diese Strömungsgrößen bereits im gemeinsamen Volumen von (Schneid-)gas und Laserstrahl möglichst gleichmäßig verteilt sind. Der konvergente Verlauf des gemeinsamen Volumens hat zwar einen homogenisierenden Einfluss auf die Gasströmung, jedoch reicht diese Beruhigungsstrecke - insbesondere bei kürzeren Fokusbrennweiten unter ungefähr f=200 mm - nicht aus, um die Strömung voll auszubilden.

Gemäß der vorliegenden Offenbarung wird daher das verzweigte Gaskanalsystem verwendet, um eine Gleichverteilung von Strömungsgrößen im gemeinsamen Volumen und/oder an einer Austrittsöffnung 142 der Gaszufuhrvorrichtung 100 zu erreichen. Wird das Gas im Bearbeitungskopf vom Gaseinlass 110 beispielsweise direkt zum letzten optischen Element geleitet, so würde keine Gleichverteilung im gemeinsamen Volumen erreicht. Die Offenbarung sieht daher vor, die Gasführung mehrmals aufzuteilen und z.B. vor dem letzten optischen Element des Laserbearbeitungskopfs, wie beispielsweise einer Fokussierlinse und/oder einem Schutzglas, symmetrisch wieder zusammenzuführen.

Der Laserbearbeitungskopf, beispielsweise zum Laserschneiden, gemäß Ausführungsformen der vorliegenden Offenbarung umfasst eine Laservorrichtung zum Bereitstellen eines Laserstrahls, wie etwa eine Lichtleitfaser. Der Laserstrahl kann auch als "Bearbeitungs-strahl" oder "Bearbeitungslaserstrahl" bezeichnet werden. Der Laserbearbeitungskopf ist eingerichtet, um den Laserstrahl auf einen Bearbeitungsbereich eines Werkstücks zu lenken. Der Laserbearbeitungskopf kann eine Kollimatorlinse zur Kollimation des Laserstrahls und eine Fokussieroptik, wie beispielsweise eine Fokussierlinse oder Anordnung von Fokussierlinsen zum Fokussieren des Laserstrahls auf das Werkstück aufweisen.

Der Laserbearbeitungskopf umfasst ferner die Gaszufuhrvorrichtung 100 zum Erzeugen eines homogenen Gasstroms gemäß den hierin beschriebenen Ausführungsformen. Die Gaszufuhrvorrichtung 100 kann dazu eingerichtet sein, dass ein vom Laserbearbeitungssystem zugeführter Laserstrahl und der durch den Gaseinlass 110 zugeführte und über das Gaskanalsystem geleitete Gasstrom im gemeinsamen Volumen im Wesentlichen koaxial überlagert werden. Beispielsweise kann ein optischer Zugang 150, der eine Faserbuchse sein kann, vorgesehen sein, durch den der Laserstrahl in das gemeinsame Volumen eintreten kann.

Der Laserbearbeitungskopf kann gemäß Ausführungsformen entlang einer Bearbeitungsrichtung bewegbar sein. Die Bearbeitungsrichtung kann eine Schneidrichtung und/oder eine Bewegungsrichtung des Laserbearbeitungskopfes bezüglich des Werkstücks sein. Insbesondere kann die Bearbeitungsrichtung eine horizontale Richtung sein. Die Bearbeitungsrichtung kann auch als "Schneidrichtung" oder "Vorschubrichtung" bezeichnet werden.

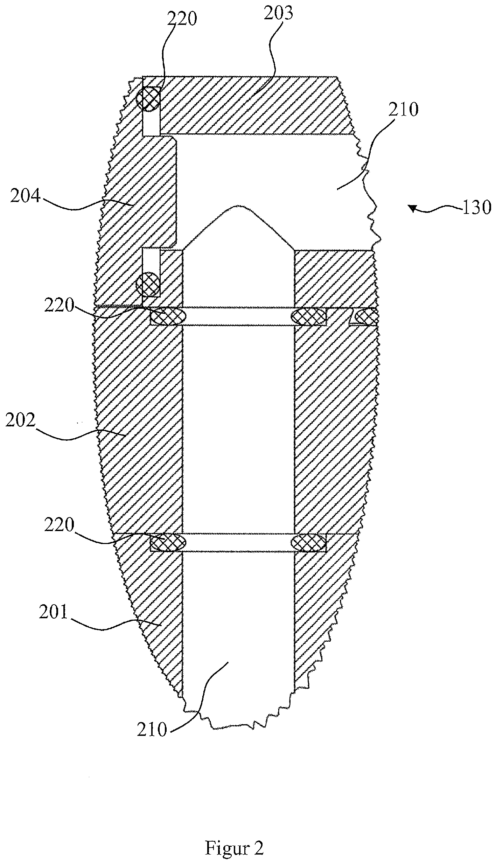

Figur 2 zeigt das Prinzip der Ausbildung eines Kanals des erfindungsgemäßen Gaskanalsystems 130 der Gaszufuhrvorrichtung 100. Wenn, wie in Figur 1 dargestellt, die Gaszufuhrvorrichtung 100 im Laserbearbeitungskopf integriert ist, kann das Gaskanalsystem 130 durch Bohrungen 210 in einem oder mehreren Elementen 201, 202, 203, 204 des Laserbearbeitungskopfes realisiert werden.

Bezugnehmend auf die Figur 2 umfasst das Gaskanalsystem 130 nach dem Gaseinlass 110 Leitungen oder Kanäle, wie beispielsweise Bohrungen 210, in einem oder mehreren Bauteilen oder Elementen 201, 202, 203, 204 der Gaszufuhrvorrichtung 100 bzw. des Laserbearbeitungskopfes. Die Bohrungen 210 können angeordnet sein, dass sie sich mehrmals verzweigen und die Gasführung so immer weiter aufgefächert wird. Beispielsweise kann die Gaszufuhrvorrichtung 100 wenigstens ein Element mit einem Hohlraum oder einer Kammer umfassen, wobei der Hohlraum oder die Kammer das gemeinsame Volumen definiert. Zusätzlich können Bohrungen 210 im wenigstens einen Element vorgesehen sein, die das Gaskanalsystem 130 definieren. In manchen Ausführungsformen kann die Gaszufuhrvorrichtung 100 aus mehreren Bauteilen oder Elementen 201, 202, 203, 204 (die auch Bauteile bzw. Elemente des Laserbearbeitungskopfes sein können) bestehen, die jeweils Bohrungen 210 aufweisen und miteinander verbunden bzw. verbindbar sind. Zwischen den einzelnen Bauteilen oder Elementen können entsprechende Dichtringe 220 vorgesehen sein, um eine verlustfreie Führung des Gases zu gewährleisten. In Figur 2 ist beispielhaft gezeigt, wie durch das Zusammenfügen mehrere Komponenten ein Strömungskanal für das (Schneid-)gas entsteht. Somit kann die Gasführung nach dem Gaseinlass 110 mehrmals aufgeteilt und anschließend im gemeinsamen Volumen symmetrisch zusammengeführt werden.

Das Gaskanalsystem 130 kann mehrere Bohrungen 210 oder Gaskanäle 105 umfassen, die in einem Winkel zueinander verlaufen. Anders gesagt können zumindest einige Bohrungen 210 oder Kanäle 105 nicht parallel zueinander verlaufen. Beispielsweise können zumindest einige Bohrungen 210 oder Kanäle 105 senkrecht zueinander verlaufen. Typischerweise umfasst das Gaskanalsystem 130 vertikale und horizontale Bohrungen 210 oder Kanäle 105, die miteinander verbunden sind. Ein Richtungswechsel der Bohrungen 210 oder Kanäle 105 kann beispielsweise an jeder Verzweigung des Gaskanalsystems 130 erfolgen.

Die Gaszufuhrvorrichtung 100 umfasst die Austrittsöffnung 142 an einem ersten Ende des gemeinsamen Volumens. Die Austrittsöffnung 142 kann den kleinsten Durchmesser der Gaszufuhrvorrichtung 100 bzw. der gesamten Gasführung darstellen, so dass an dieser Stelle die höchste Geschwindigkeit vorliegt und bei überkritischen Strömungsverhältnissen hier der Massenstrom festgelegt werden kann. Die Gaszufuhrvorrichtung 100 kann dazu eingerichtet sein, an einem zweiten Ende des gemeinsamen Volumens am Laserbearbeitungskopf befestigt zu werden. Das zweite Ende des gemeinsamen Volumens kann dem ersten Ende gegenüberliegend angeordnet sein. Alternativ kann die Gaszufuhrvorrichtung ein Teil des Laserbearbeitungskopfes sein oder darin integriert sein.

Der im Wesentlichen homogene Gasstrom kann der im gemeinsamen Volumen strömende Gasstrom und/oder der aus dem gemeinsamen Volumen ausströmende Gasstrom sein. Insbesondere können das verzweigte Gaskanalsystem, die Auslassöffnungen und das gemeinsame Volumen so eingerichtet sein, dass ein im Wesentlichen homogener Gasstrom aus der Gaszufuhrvorrichtung 100 bzw. aus der Austrittsöffnung 142 austritt. Gemäß einigen Ausführungsformen, die mit anderen hier beschriebenen Ausführungsformen kombiniert werden können, sind das Gaskanalsystem 130 und die Auslassöffnungen eingerichtet, um eine im Wesentlichen gleichmäßige Verteilung einer oder mehrerer Strömungsgrößen des im gemeinsamen Volumen strömenden Gases und/oder des durch die Austrittsöffnung 142 aus dem gemeinsamen Volumen ausströmenden Gases bereitzustellen. Die eine oder die mehreren Strömungsgrößen können aus der Gruppe ausgewählt sein, die eine Strömungsgeschwindigkeit, eine Strömungsrichtung, einen statischen Druck und eine Gasdichte und ähnliches umfasst.

Das Gas, das auch als "Schneidgas" bezeichnet werden kann, kann gemäß Ausführungsformen ein Inertgas, wie beispielsweise Stickstoff, oder ein reaktives Gas, wie beispielsweise Sauerstoff sein. Beim Schneiden von Edelstahl kann beispielsweise Stickstoff (N₂) verwendet werden. Beim Schneiden von Baustahl hingegen kann Sauerstoff (O₂) verwendet werden. Das Schneidgas unterstützt in diesem Anwendungsfall den Trennvorgang, indem es die Umsetzung von Eisen zu Eisenoxid ermöglicht. Auf diese Weise wird neben der Laserstrahlung zusätzlich Reaktionswärme in den Prozess eingebracht.

Typischerweise kann die Gaszufuhrvorrichtung 100 eine Schneiddüse 140 umfassen, die das gemeinsame Volumen 120 enthält oder an einem ersten Ende des gemeinsamen Volumens 142 angeordnet ist. Die Schneiddüse 140 kann die Austrittsöffnung 142 umfassen. Durch die Austrittsöffnung 142 der Schneiddüse 140 können die Laserstrahlung und das (Schneid-)Gas vom gemeinsamen Volumen kommend auf eine Bearbeitungsstelle eines Werkstücks gerichtet werden.

Der Gaseinlass 110 kann der einzige Gaseinlass zum Gaskanalsystem 130 sein. Anders gesagt kann in manchen Ausführungsformen das Gas nur über einen einzigen Gaseinlass zugeführt werden. Der Gaseinlass 110 kann seitlich oder oben an der Gaszufuhrvorrichtung 100 bzw. am Bearbeitungskopf angeordnet sein. Das Schneidgas kann am Einlass entweder direkt durch einen Schlauch von extern oder durch weitere Bauteile des Bearbeitungskopfes von intern in den Gaseinlass 110 zugeführt werden.

Die Gleichverteilung des Gases im gemeinsamen Volumen wird insbesondere dadurch erschwert, wenn die Zuleitung des Gases in das gemeinsame Volumen 120 üblicherweise durch einen einzelnen Einlass erfolgt. Hierdurch ergibt sich eine starke Richtungsabhängigkeit aller Strömungsgrößen im gemeinsamen Volumen in Abhängigkeit von der Position des Einlasses. Die Verwendung eines einzelnen Einlasses bzw. von nur wenigen Einlassen ist aus Anwendungssicht aber wünschenswert, da dies den Anschluss und die Zuleitung des Schneidgases von einem Gasflaschenbündel zum Bearbeitungskopf erleichtert. Das erfindungsgemäße verzweigte Gaskanalsystem ermöglicht eine Gleichverteilung der Strömungsgrößen im gemeinsamen Volumen trotz einseitigem Anschluss der Gaszuleitung.

Die Gaszufuhrvorrichtung 100 kann an einem Laserbearbeitungskopf befestigt oder darin integriert sein. Der Laserbearbeitungskopf umfasst gemäß Ausführungsformen ein optisches Element, das insbesondere das letzte optische Element im Strahlengang des Laserstrahls sein kann. Typischerweise ist das optische Element eine Fokussieroptik (z.B. eine Fokussierlinse oder eine Anordnung von mehreren Fokussierlinsen, die die optische Achse definieren können) oder ein Schutzglas, das die davor befindliche Fokussieroptik vor Verschmutzung durch Prozessemissionen schützt. Die Gaszufuhrvorrichtung 100 kann so am Laserbearbeitungskopf befestigbar oder integriert sein, dass das optische Element am zweiten Ende des gemeinsamen Volumens, das der Austrittsöffnung 142 gegenüberliegt, angeordnet ist. Insbesondere kann das gemeinsame Volumen direkt im Anschluss an das optische Element angeordnet sein. Anders gesagt befinden sich keine weiteren optischen Elemente zwischen dem optischen Element und dem gemeinsamen Volumen. Insbesondere kann das gemeinsame Volumen zwischen dem optischen Element und der Austrittsöffnung 142 angeordnet sein. Das (Schneid-)Gas und der Laserstrahl können demzufolge unterhalb des letzten optischen Elementes vereinigt (d.h. überlagert oder überlappt) werden. Vom letzten optischen Element ausgehend werden die Laserstrahlung und Gasströmung im gemeinsamen Volumen geführt, das zur Austrittsöffnung 142 hin konvergent verlaufen kann.

Gemäß Ausführungsformen ist die Gaszufuhrvorrichtung 100, und insbesondere das Gaskanalsystem 130 eingerichtet, um eine im Wesentlichen homogene oder gleichmäßige Gaszufuhr entlang eines gesamten Umfangs des optischen Elements des Laserbearbeitungskopfes bereitzustellen. Der Umfang des optischen Elements ist typischerweise in einer Ebene senkrecht zur optischen Achse, die beispielsweise durch die Fokussieroptik bereitgestellt wird, definiert.

In manchen Ausführungsformen können die Auslassöffnungen 132 zum gemeinsamen Volumen so angeordnet sein, dass der Gasstrom zum zweiten Ende der Gaszufuhrvorrichtung 100, das am Laserbearbeitungskopf befestigbar ist, bzw. zum optischen Element des Laserbearbeitungskopfes, hin gerichtet ist. Beispielsweise kann der Gasstrom im Wesentlichen senkrecht auf das optische Element gerichtet sein. Typischerweise können die Auslassöffnungen in einem Winkel gegenüber der Vertikalen und/oder der optischen Achse ausgerichtet sein. Gemäß Ausführungsformen kann der Winkel gegenüber der Vertikalen ein Winkel zwischen 0° (senkrecht zum optischen Element) und 90° (parallel zum optischen Element) sein.

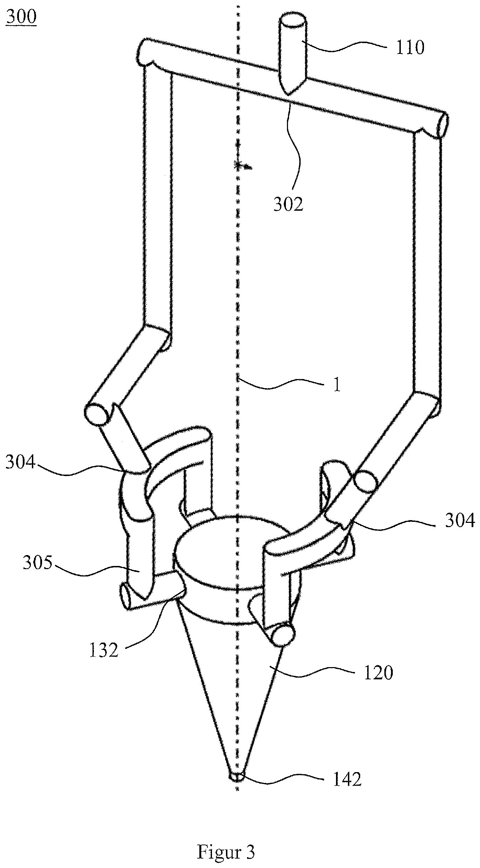

Figur 3 zeigt ein Gaskanalsystem 300 gemäß Ausführungsformen der vorliegenden Offenbarung. In Figur 3 ist eine erfindungsgemäße Gasführung eines Laserschneidkopfes schematisch dargestellt, die sich vom Einlass 110 ausgehend dreimal verzweigt und im gemeinsamen Volumen 120 wieder symmetrisch zusammengeführt wird. Hier weist das Gaskanalsystem also vier Gaskanäle 305 auf, die den Gaseinlass 110 über je eine Auslassöffnung 132 mit dem gemeinsamen Volumen 120 verbinden. Gezeigt ist dabei das Volumen, das das Gas in der Gaszufuhrvorrichtung oder im Schneidkopf einnimmt. Die Struktur der Gaszufuhrvorrichtung (oder des Schneidkopfes) stellt somit die entsprechende Negativform dar.

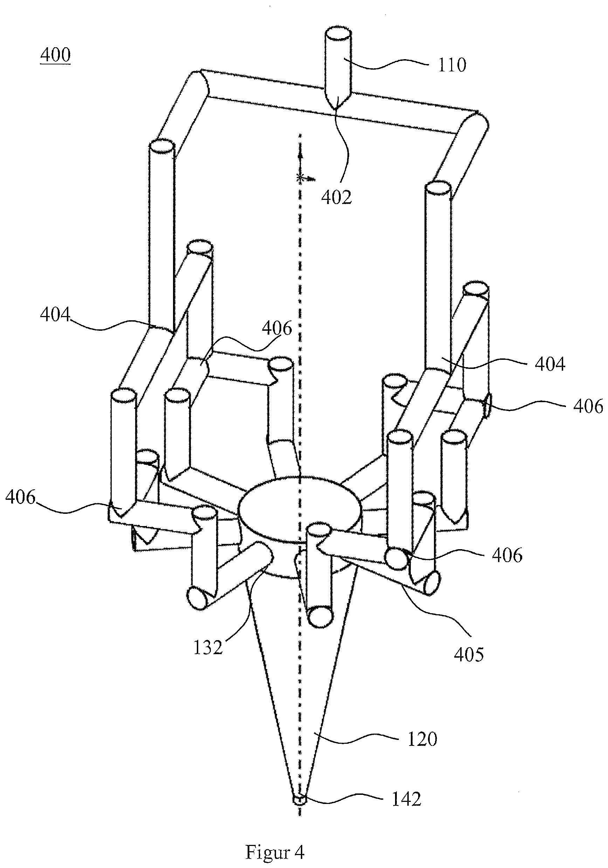

In Figur 3 ist neben dem Gasvolumen eine optische Achse 1 dargestellt, die eine Achse des Laserstrahls ist. Der einzelne Gaseinlass 110 (z.B. ein Schneidgasanschluss) ist oben am Fluidvolumen dargestellt. Von hier aus verzweigt sich die Gasführung mehrmals an den Verzweigungspunkten 302 und 304 in insgesamt vier Gaskanäle 305. Anschließend wird das Gas dem gemeinsamen Volumen 120 durch vier Auslassöffnungen 132, d.h. Zuleitungen, zugeführt. Gemäß Ausführungsformen korreliert oder skaliert die Anzahl der Gaskanäle mit der Anzahl an Auslassöffnungen 132. Es können zwei oder mehr Verzweigungen bzw. Verzweigungspunkte vorgesehen sein. In Figur 3 sind beispielsweise drei Verzweigungspunkte gezeigt, in Figur 4 sieben Verzweigungspunkte.

Die Gaszufuhrvorrichtung kann eine Mittelebene aufweisen. Die Mittelebene kann im Wesentlichen parallel zur optischen Achse 1 des Laserbearbeitungskopfes sein. Die Mittelebene kann sich vom ersten Ende des gemeinsamen Volumens 120 zum zweiten Ende des gemeinsamen Volumens 120 erstrecken. Typischerweise ist zumindest ein Abschnitt des Gaskanalsystems 300, und vorzugsweise das gesamte Gaskanalsystem 300 (mit oder ohne den Gaseinlass 110) symmetrisch zur Mittelebene. Beispielsweise kann die Mittelebene eine Symmetrieebene des gemeinsamen Volumens 120 sein. Die Symmetrie kann eine Spiegelsymmetrie sein.

Die Auslassöffnungen 132 können symmetrisch um einen Umfang des gemeinsamen Volumens 120 angeordnet sein, und können insbesondere symmetrisch bezüglich der Mittelebene angeordnet sein. Das mehrfach verzweigte Gaskanalsystem 300 kann das Gas den symmetrisch angeordneten Auslassöffnungen 132 zuführen, so dass eine homogene Gaszufuhr zum gemeinsamen Volumen 120 sowie ein homogener Gasstrom innerhalb des gemeinsamen Volumens 120 erreicht werden kann.

Gemäß Ausführungsformen kann die Gasführung an jeder Verzweigung symmetrisch zu einer jeweiligen Mittelebene aufgebaut sein, um eine gleichverteilte Durchströmung der folgenden Gaskanäle zu gewährleisten. Hierdurch ist sichergestellt, dass durch jeden der Gaskanäle zum gemeinsamen Volumen 120 der gleiche Volumenstrom geführt wird, wodurch sich eine gleichverteilte, richtungsunabhängige Verteilung wichtiger Strömungsgrößen im gemeinsamen Volumen 120 ergibt.

Figur 4 zeigt ein Gaskanalsystem 400 gemäß weiteren Ausführungsformen der vorliegenden Offenbarung. Figur 4 zeigt dabei eine erfindungsgemäße Gasführung mit einer Aufteilung in acht Gaskanäle 405 und acht Auslassöffnungen 132. Wiederum wird die Gasführung an jeder Verzweigung 402, 404, 406 symmetrisch zu einer Mittelebene fortgeführt. Je mehr Gaskanäle 405 bzw. Auslassöffnungen 132 in das gemeinsame Volumen 120 zur Verfügung stehen, desto gleichmäßiger sind wichtige Strömungsgrößen im gemeinsamen Volumen 120 verteilt.

In einigen Ausführungsformen ist nicht an jeder Verzweigung eine symmetrische Fortführung der Gaskanäle vorgesehen. Ein Grund hierfür kann sein, dass im Schneidkopf nur begrenzter Bauraum zur Verfügung steht bzw. nur in eine Richtung zur Verfügung steht. Ist eine symmetrische Fortführung nicht vorhanden, so kann gemäß Ausführungsformen ein hydraulischer Abgleich durchgeführt werden. Hierzu können die Fortführungen bzw. die weiterführenden Bohrungen in ihrem Durchmesser, ihrer Länge und/oder in ihrer Lage so dimensioniert sein, dass jede weiterführende Bohrung bzw. jeder abgehende Kanal den gleichen Volumenstrom führt.

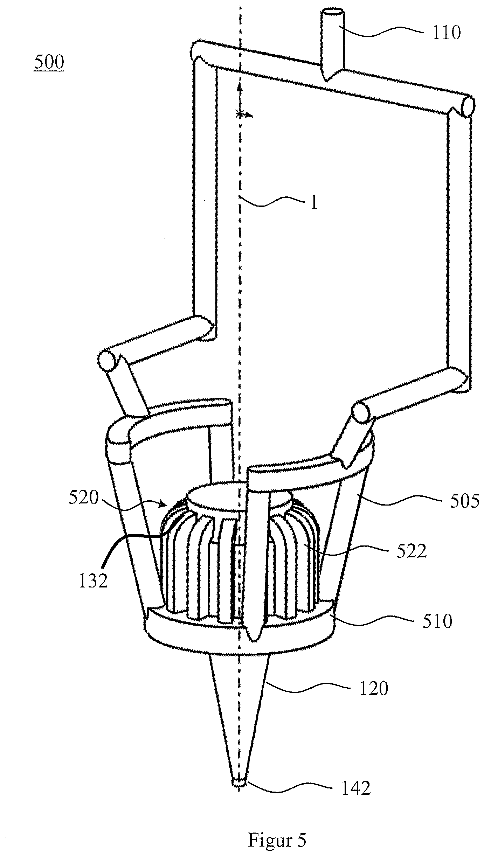

Figur 5 zeigt ein Gaskanalsystem 500 gemäß noch weiteren Ausführungsformen der vorliegenden Offenbarung.

Gemäß Ausführungsformen umfasst die Gaszufuhrvorrichtung, und insbesondere das Gaskanalsystem 500, wenigstens ein Stauvolumen 510 und/oder wenigstens ein Gleichrichterelement 520. Der Gasstrom kann vom Stauvolumen 510 aus über das Gleichrichterelement 520 in das gemeinsame Volumen 120 geführt werden. Insbesondere kann das Gleichrichterelement 520 zwischen dem Stauvolumen 510 und dem gemeinsamen Volumen 120 angeordnet sein.

Das Stauvolumen 510 sorgt dafür, dass die Geschwindigkeit der Gasströmung reduziert wird. Aufgrund der Energieerhaltung erhöht sich gleichzeitig der statische Druck der Strömung. Je vollständiger die Strömung abgebremst wird, desto gleichmäßiger ist die Verteilung des statischen Drucks im Stauvolumen 510. Eine Gleichverteilung des statischen Drucks wiederum bewirkt, dass die Ausgänge des Stauvolumens 510 gleichmäßig mit Schneidgas beaufschlagt werden und dieses somit gleichmäßig beispielsweise über den Umfang verteilt in das gemeinsame Volumen 120 einströmt. Die Richtungsabhängigkeit, die der Strömung durch den einseitigen Gaseinlass 110 aufgeprägt wird, kann somit weiter vermindert werden.

Im Beispiel der Figur 5 wird die Gasführung zunächst auf vier Gaskanäle 505 aufgefächert. Die einzelnen Leitungen werden dann im Stauvolumen 510, beispielsweise in der Nähe des letzten optischen Elementes des Laserbearbeitungskopfes, wieder zusammengeführt. Das Stauvolumen 510 sorgt für eine zusätzliche Homogenisierung der Strömung. Vom Stauvolumen 510 aus wird das Gas über das Gleichrichterelement 520 zu den Auslassöffnungen 132 am gemeinsamen Volumen 120 geführt. Auf diese Weise ist sichergestellt, dass das letzte optische Element über den Umfang besonders gleichverteilt angeströmt wird und somit auch die Strömungsgrößen im gemeinsamen Volumen 120 besonders gleichverteilt sind.

Das Gleichrichterelement 520 kann aus der Gruppe ausgewählt sein, die Rohrbündel, Siebe, Lamellen, Wabenelemente, Beruhigungsstrecken und ähnliches umfasst. Beispielsweise kann das Gleichrichterelement 520 eine Vielzahl symmetrisch um den Umfang des gemeinsamen Volumens 120 verteilter Beruhigungsstrecken 522 umfassen. Eine Anzahl der Beruhigungsstrecken 522 kann zwischen 4 und 24, oder zwischen 8 und 16, liegen. Des Weiteren können die Beruhigungsstrecken ein Verhältnis D/L von Streckendurchmesser D zu Streckenlänge L zwischen 0,05 und 0,3, oder zwischen 0,1 und 0,3, aufweisen. Der Streckendurchmesser D kann auch als "Kanalbreite" oder "Rohrdurchmesser" bezeichnet werden.

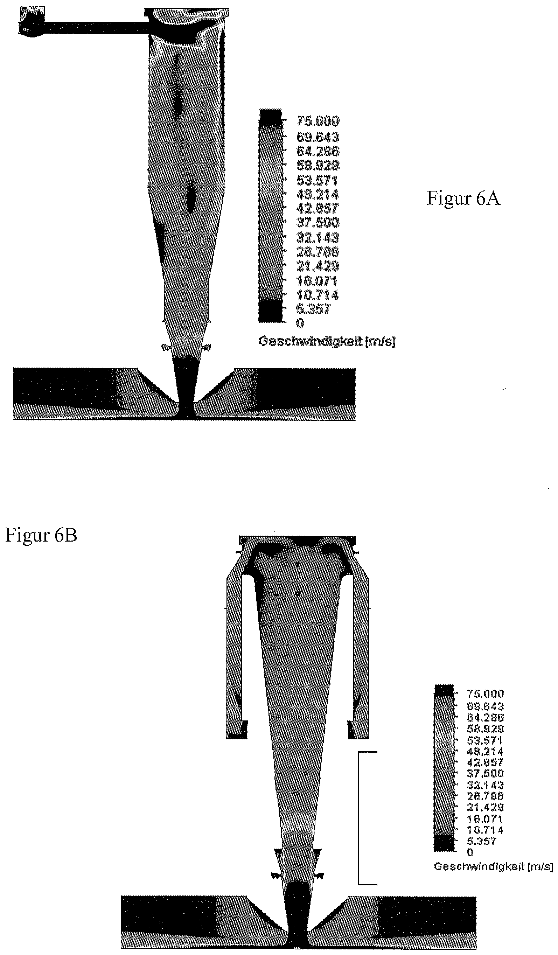

Figuren 6A und B zeigen simulierte Geschwindigkeitsverteilungen im gemeinsamen Volumen. In den Figuren 6A und B sind insbesondere CFD-Simulationsergebnisse im gemeinsamen Volumen dargestellt. Die betrachtete Strömungsgröße ist in beiden Figuren die Absolutgeschwindigkeit.

Figur 6A zeigt eine simulierte Geschwindigkeitsverteilung im gemeinsamen Volumen mit einseitiger Zuleitung des Schneidgases ohne das erfindungsgemäße Gaskanalsystem. Die betrachtete Strömungsgröße ist ungleichmäßig verteilt.

Figur 6B zeigt eine simulierte Geschwindigkeitsverteilung im gemeinsamen Volumen mit aufgefächerter und symmetrischer Zuleitung des Schneidgases gemäß Ausführungsformen der vorliegenden Offenbarung. Die betrachtete Strömungsgröße ist gleichmäßig verteilt. Es ist insbesondere zu erkennen, dass die Geschwindigkeit bei symmetrischer Zuleitung wesentlich homogener im gemeinsamen Volumen verteilt ist, als dies bei einseitiger Zuleitung der Fall ist.

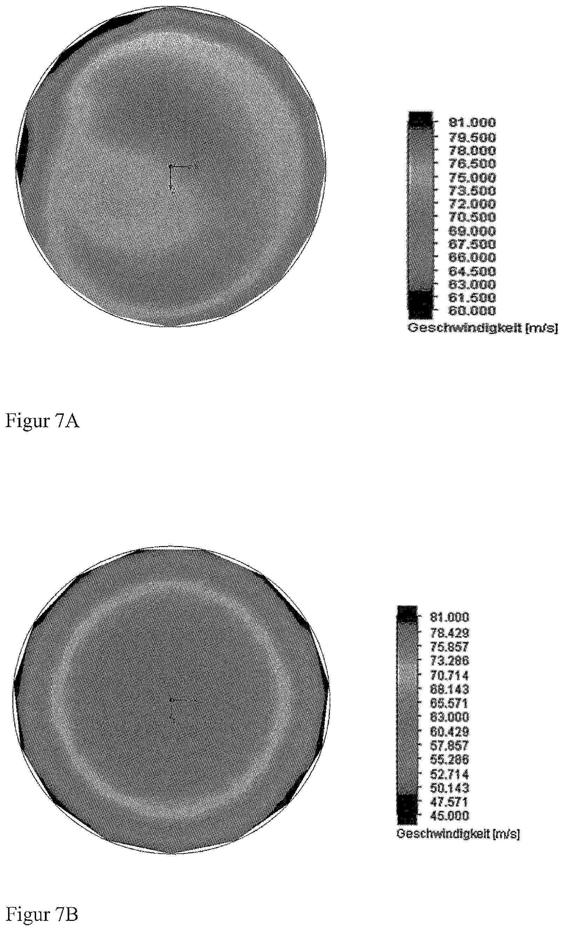

Figuren 7A und B zeigen simulierte Geschwindigkeitsverteilungen in einer horizontalen Schnittebene am Düsenauslass bzw. an der Austrittsöffnung 142. Insbesondere ist die simulierte Geschwindigkeitsverteilung in einer horizontalen Schnittebene kurz über dem Düsenauslass dargestellt.

Figur 7A zeigt eine simulierte Geschwindigkeitsverteilung in einer horizontalen Schnittebene am Düsenauslass bei einseitiger Zuleitung des Schneidgases ohne das erfindungsgemäße Gaskanalsystem. Die ungleichmäßige Verteilung der betrachteten Strömungsgröße setzt sich im gemeinsamen Volumen bis zur Austrittsöffnung 142 fort.

Figur 7B zeigt eine simulierte Geschwindigkeitsverteilung in einer horizontalen Schnittebene am Düsenauslass bei symmetrischer Zuleitung des Schneidgases unter Verwendung des erfindungsgemäßen Gaskanalsystems. Die betrachtete Strömungsgröße ist auch in der Austrittsöffnung 142 viel gleichmäßiger verteilt.

Es zeigt sich, dass sich die Homogenität der Geschwindigkeitsverteilung im gemeinsamen Volumen auch auf die Verteilung am Düsenauslass bzw. an der Austrittsöffnung 142 auswirkt. Bei nur einer Zuleitung (Figur 7A) ist die Geschwindigkeitsverteilung sehr unsymmetrisch. Das Maximum ist deutlich aus der Mitte heraus verschoben und das Minimum liegt einseitig an einem Teil des Randbereichs vor. Im Gegensatz hierzu bildet sich bei der erfindungsgemäßen aufgefächerten Zuführung eine rotationssymmetrische Verteilung der Geschwindigkeit um den Mittelpunkt des Schnittkreises aus, wie in Figur 7B gezeigt. Das Maximum liegt in der Kreismitte, das Minimum liegt im gesamten Randbereich vor. Mit einer derartigen Geschwindigkeitsverteilung sind bessere Schneidergebnisse zu erreichen als im Fall der Verteilung der Figur 7A.

Gemäß der vorliegenden Offenbarung wird ein verzweigtes Gaskanalsystem verwendet, um eine Gasströmung zu homogenisieren. Insbesondere wird die Gasströmung vor dem Eintritt in das gemeinsame Volumen kopfintern in mehrere Gasleitungen aufgeteilt und im gemeinsamen Volumen wieder symmetrisch zusammen geführt. Hierbei werden entsprechende Leitungen bzw. Kanäle mit dem annähernd gleichen Volumenstrom beaufschlagt. Durch die erfindungsgemäße Aufteilung der Gasführung, z.B. in einem Laserbearbeitungskopf, durch die erfindungsgemäße Gaszufuhrvorrichtung können wichtige Strömungsgrößen an der Gasaustrittsöffnung vergleichmäßigt werden. Dadurch kann eine verbesserte Oberflächenqualität und Rechtwinkligkeit der Schnittkanten und höhere Schnittgeschwindigkeit erzielt werden.

## Patentansprüche

1. Gaszufuhrvorrichtung (100) für einen Laserbearbeitungskopf zum Erzeugen eines homogenen Gasstroms, umfassend:
einen Gaseinlass (110);
ein gemeinsames Volumen (120) zum Überlagern eines Laserstrahls und des Gasstroms;
ein Gaskanalsystem (130, 300, 400, 500), das sich ausgehend vom Gaseinlass (110) in mindestens drei Gaskanäle (305, 405, 505) verzweigt, die den Gaseinlass (110) jeweils mit mindestens einer Auslassöffnung (132) am gemeinsamen Volumen (120) verbinden; und
eine Austrittsöffnung (142) an einem ersten Ende des gemeinsamen Volumens (120) zum Bereitstellen des homogenen Gasstroms,
**dadurch gekennzeichnet, dass**
das Gaskanalsystem (130, 300, 400, 500) mindestens zwei Verzweigungspunkte (302, 304; 402, 404, 406) aufweist, die hintereinander entlang des Strömungswegs vom Gaseinlass (110) zum gemeinsamen Volumen (120) liegen, wobei ein mit dem Gaseinlass (110) verbundener erster Gaskanal sich an einem ersten Verzweigungspunkt (302; 402) in mindestens zwei zweite Gaskanäle aufteilt, die sich jeweils an einem zweiten Verzweigungspunkt (304; 404) in mindestens zwei dritte Gaskanäle aufteilen.

2. Die Gaszufuhrvorrichtung (100) nach Anspruch 1, wobei Kanallängen vom Gaseinlass (110) zu den Auslassöffnungen (132) im Wesentlichen gleich sind; und/oder wobei die Gaskanäle (305, 405, 505) als Bohrungen ausgebildet sind.

3. Die Gaszufuhrvorrichtung (100) nach Anspruch 1 oder 2, wobei das Gaskanalsystem (130, 300, 400, 500) symmetrisch zu einer Ebene ist, die im Wesentlichen parallel zu einer optischen Achse (1) des Laserbearbeitungskopfes ist und/oder die sich durch den Gaseinlass (110) erstreckt und/oder die eine Symmetrieebene des gemeinsamen Volumens (120) ist.

4. Die Gaszufuhrvorrichtung (100) nach Anspruch 3, wobei die Ebene eine Mittelebene der Gaszufuhrvorrichtung (100) und/oder eine Mittelebene durch einen Verzweigungspunkt (302, 304; 402, 404, 406) des Gaskanalsystems ist.

5. Die Gaszufuhrvorrichtung (100) nach einem der Ansprüche 1 bis 4, wobei zwischen den Gaskanälen (305, 405, 505) und den Auslassöffnungen (132 am gemeinsamen Volumen (120) ein Stauvolumen (510) angeordnet ist.

6. Die Gaszufuhrvorrichtung (100) nach Anspruch 5, wobei Kanallängen vom Gaseinlass (110) zum Stauvolumen (510) im Wesentlichen gleich sind.

7. Die Gaszufuhrvorrichtung (100) nach einem der Ansprüche 1 bis 6, weiter mit einem Gleichrichterelement (520), das so angeordnet ist, dass der Gasstrom vom Gaskanalsystem (500) über das Gleichrichterelement (520) in das gemeinsame Volumen (120) geführt wird.

8. Die Gaszufuhrvorrichtung (100) nach Anspruch 7, wobei das Gleichrichterelement (520) aus der Gruppe ausgewählt ist, die Rohrbündel, Sieben, Lamellen, Wabenelementen und Beruhigungsstrecken umfasst; und/oder

9. Die Gaszufuhrvorrichtung (100) nach Anspruch 7 oder 8, wobei das Gleichrichterelement (520) eine Vielzahl von symmetrisch um den Umfang des gemeinsamen Volumens (120) verteilten Beruhigungsstrecken (522) umfasst.

10. Die Gaszufuhrvorrichtung (100) nach Anspruch 9, wobei eine Anzahl der Beruhigungsstrecken (522) zwischen einschließlich 4 und 24 oder zwischen einschließlich 8 und 16 ist und/oder wobei die Beruhigungsstrecken (522) ein Verhältnis D/L von Streckendurchmesser D zu Streckenlänge L zwischen 0,05 und 0,3 oder zwischen einschließlich 0,1 und 0,3 aufweisen.

11. Die Gaszufuhrvorrichtung (100) nach einem der vorstehenden Ansprüche,
wobei das Gaskanalsystem mindestens einen Verzweigungspunkt (302, 304; 402, 404, 406) aufweist und sich ein Kanal des Gaskanalsystems (130, 300, 400, 500) an jedem Verzweigungspunkt (302, 304; 402, 404, 406) so in zwei oder mehr nachfolgende Kanäle verzweigt, dass ein Gasstrom auf alle nachfolgenden Kanäle gleichmäßig aufgeteilt wird.

12. Die Gaszufuhrvorrichtung (100) nach einem der vorstehenden Ansprüche, wobei die Gaszufuhrvorrichtung im Laserbearbeitungskopf integriert ist oder ein Teil desselben bildet, oder
wobei die Gaszufuhrvorrichtung (100) ferner mindestens ein Befestigungsmittel an einem zweiten Ende des gemeinsamen Volumens (120), dass der Austrittsöffnung (142) gegenüberliegt, zum Befestigen der Gaszufuhrvorrichtung (100) an einem Laserbearbeitungskopf umfasst.

13. Laserbearbeitungskopf, umfassend:
eine Laservorrichtung zum Bereitstellen eines Laserstrahls; und
eine Gaszufuhrvorrichtung (100) zum Erzeugen eines homogenen Gasstroms nach einem der vorausgehenden Ansprüche.

14. Der Laserbearbeitungskopf nach Anspruch 13, weiter umfassend ein optisches Element, wobei das gemeinsame Volumen (120) der Gaszufuhrvorrichtung zwischen dem optischen Element und einer Düsenöffnung des Laserbearbeitungskopfes angeordnet ist.

15. Der Laserbearbeitungskopf nach Anspruch 13 oder 14,
wobei das gemeinsame Volumen (120) direkt im Anschluss an das optische Element angeordnet ist und die Auslassöffnungen (132) so eingerichtet sind, dass der durch die Auslassöffnungen (132) strömende Gasstrahl in einem Winkel zwischen 0° und 90° bezüglich des optischen Elements ausgerichtet ist; und/oder
wobei der Gaseinlass (110) der Gaszufuhrvorrichtung der einzige Gaseinlass für das Schneidgas am Laserbearbeitungskopf ist.

## Claims

1. A gas supply device (100) for a laser machining head for generating a homogeneous gas flow, comprising:
a gas inlet (110);
a shared volume (120) for superimposing a laser beam and the gas flow;
a gas channel system (130, 300, 400, 500) which, starting from said gas inlet (110), branches into at least three gas channels (305, 405, 505), each of which connecting said gas inlet (110) with at least one outlet opening (132) at said shared volume (120); and
an exit opening (142) at a first end of said shared volume (120) for providing the homogeneous gas flow,
**characterized in that**
said gas channel system (130, 300, 400, 500) has at least two branching points (302, 304; 402, 404, 406), which are arranged consecutively along the flow path from the gas inlet (110) to the shared volume (120), wherein a first gas channel connected to the gas inlet (110) is split at a first branching point (302; 402) into at least two second gas channels that are each split into at least two third gas channels at a second branching point (304; 404).

2. The gas supply device (100) according to claim 1, wherein channel lengths from said gas inlet (110) to said outlet openings (132) are substantially the same; and/or
wherein said gas channels (305, 405, 505) are configured as bores.

3. The gas supply device (100) according to claim 1 or 2, wherein said gas channel system (130, 300, 400, 500) is symmetrical to a plane which is substantially parallel to an optical axis (1) of said laser machining head and/or which extends through said gas inlet (110) and/or which is a symmetry plane of said shared volume (120).

4. The gas supply device (100) according to claim 3, wherein said plane is a central plane of said gas supply device (100) and/or a central plane through a branching point (302, 304; 402, 404, 406) of said gas channel system.

5. The gas supply device (100) according to one of claims 1 to 4, wherein an accumulation volume (510) is arranged between said gas channels (305, 405, 505) and said outlet openings (132) at said shared volume (120).

6. The gas supply device (100) according to claim 5, wherein channel lengths from said gas inlet (110) to said accumulation volume (510) are substantially the same.

7. The gas supply device (100) according to one of claims 1 to 6, further comprising a rectifier element (520) which is arranged such that the gas flow is guided from said gas channel system (500) via said rectifier element (520) into said shared volume (120).

8. The gas supply device (100) according to claim 7, wherein said rectifier element (520) is selected from the group consisting of bundles of tubes, sieves, fins, honeycomb elements and calming sections; and/or

9. The gas supply device (100) according to claim 7 or 8, wherein said rectifier element (520) comprises a plurality of calming sections (522) distributed symmetrically around the periphery of said shared volume (120).

10. The gas supply device (100) according to claim 9, wherein a number of calming sections (522) is between 4 and 24, inclusive, or between 8 and 16, inclusive, and/or wherein said calming sections (522) have a ratio D/L of section diameter D to section length L between 0.05 and 0.3 or between 0.1 and 0.3, inclusive.

11. The gas supply device (100) according to one of the preceding claims,
wherein said gas channel system has at least one branching point (302, 304; 402, 404, 406), and wherein a gas channel of said gas channel system (130, 300, 400, 500) branches, at each branching point (302, 304; 402, 404, 406), into two or more subsequent gas channels in such a way that a gas flow is uniformly distributed over all subsequent gas channels.

12. The gas supply device (100) according to one of the preceding claims, wherein said gas supply device is integrated in said laser machining head or forms part thereof, or
wherein said gas supply device (100) further comprises at least one fastening means at a second end of said shared volume (120) which is located opposite said exit opening (142) for fastening said gas supply device (100) to a laser machining head.

13. A laser machining head comprising:
a laser device for providing a laser beam; and
a gas supply device (100) for generating a homogeneous gas flow according to one of the preceding claims.

14. The laser machining head according to claim 13, further comprising an optical element, wherein said shared volume (120) of said gas supply device is arranged between said optical element and a nozzle opening of said laser machining head.

15. The laser machining head according to claim 13 or 14,
wherein said shared volume (120) is arranged directly subsequent to said optical element and said outlet openings (132) are configured such that the gas flow flowing through said outlet openings (132) is oriented at an angle of between 0° and 90° with respect to said optical element; and/or
wherein said gas inlet (110) of said gas supply device is the only gas inlet for the cutting gas on said laser machining head.

## Revendications

1. Dispositif d'alimentation en gaz (100) pour une tête d'usinage au laser, destiné à générer un flux de gaz homogène, comportant :
une entrée de gaz (110) ;
un volume partagé (120) pour superposer un faisceau laser et le flux de gaz ;
un système de canaux de gaz (130, 300, 400, 500) qui, en partant de l'entrée de gaz (110), se ramifie en au moins trois canaux de gaz (305, 405, 505) qui relient respectivement l'entrée de gaz (110) à au moins un orifice d'évacuation (132) sur le volume partagé (120) ; et
un orifice de sortie (142) à une première extrémité du volume partagé (120) pour fournir le flux de gaz homogène,
**caractérisé en ce que**
le système de canaux de gaz (130, 300, 400, 500) comporte au moins deux points de ramification (302, 304 ; 402, 404, 406) qui sont l'un derrière l'autre le long du trajet d'écoulement de l'entrée de gaz (110) jusqu'au volume partagé (120), dans lequel un premier canal de gaz relié à l'entrée de gaz (110) se divise au niveau d'un premier point de ramification (302 ; 402) en au moins deux deuxièmes canaux de gaz qui se divisent respectivement au niveau d'un second point de ramification (304 ; 404) en au moins deux troisièmes canaux de gaz.

2. Dispositif d'alimentation en gaz (100) selon la revendication 1, dans lequel des longueurs de canaux depuis l'entrée de gaz (110) jusqu'à l'orifice d'évacuation (132) sont sensiblement égales ; et/ou
dans lequel les canaux de gaz (305, 405, 505) sont configurés comme des alésages.

3. Dispositif d'alimentation en gaz (100) selon la revendication 1 ou 2, dans lequel le système de canaux de gaz (130, 300, 400, 500) est symétrique à un plan qui est sensiblement parallèle à un axe optique (1) de la tête d'usinage au laser et/ou qui s'étend à travers l'entrée de gaz (110) et/ou qui est un plan de symétrie du volume partagé (120).

4. Dispositif d'alimentation en gaz (100) selon la revendication 3, dans lequel le plan est un plan médian du dispositif d'alimentation en gaz (100) et/ou un plan médian à travers un point de ramification (302, 304 ; 402, 404, 406) du système de canaux de gaz.

5. Dispositif d'alimentation en gaz (100) selon l'une des revendications 1 à 4, dans lequel un volume d'accumulation (510) est agencé entre les canaux de gaz (305, 405, 505) et les orifices d'évacuation (132) sur le volume partagé (120).

6. Dispositif d'alimentation en gaz (100) selon la revendication 5, dans lequel des longueurs de canaux depuis l'entrée de gaz (110) jusqu'au volume d'accumulation (510) sont sensiblement égales.

7. Dispositif d'alimentation en gaz (100) selon l'une des revendications 1 à 6, comportant en outre un élément redresseur (520) qui est agencé de telle sorte que le flux de gaz provenant du système de canaux de gaz (500) est guidé dans le volume partagé (120) par l'intermédiaire de l'élément redresseur (520).

8. Dispositif d'alimentation en gaz (100) selon la revendication 7, dans lequel l'élément redresseur (520) est choisi parmi le groupe constitué de faisceaux de tubes, de tamis, d'ailettes, d'éléments alvéolaires et de tronçons de repos ; et/ou

9. Dispositif d'alimentation en gaz (100) selon la revendication 7 ou 8, dans lequel l'élément redresseur (520) comporte une pluralité de tronçons de repos (522) répartis symétriquement autour de la périphérie du volume partagé (120).

10. Dispositif d'alimentation en gaz (100) selon la revendication 9, dans lequel une pluralité de tronçons de repos (522) est entre 4 et 24 inclus ou entre 8 et 16 inclus et/ou dans lequel les tronçons de repos (522) ont un rapport D/L du diamètre de tronçon D sur la longueur de tronçon L entre 0,05 et 0,3 ou entre 0,1 et 0,3 inclus.

11. Dispositif d'alimentation en gaz (100) selon l'une des revendications précédentes,
dans lequel le système de canaux de gaz comporte au moins un point de ramification (302, 304 ; 402, 404, 406) et un canal du système de canaux de gaz (130, 300, 400, 500) se ramifie au niveau de chaque point de ramification (302, 304 ; 402, 404, 406) en deux canaux suivants ou plus de telle sorte qu'un flux de gaz est uniformément réparti entre tous les canaux suivants.

12. Dispositif d'alimentation en gaz (100) selon l'une des revendications précédentes, dans lequel le dispositif d'alimentation en gaz est intégré dans la tête d'usinage au laser ou forme une partie de celle-ci, ou
dans lequel le dispositif d'alimentation en gaz (100) inclut en outre au moins un moyen de fixation à une seconde extrémité du volume partagé (120) opposée à l'orifice de sortie (142) pour fixer le dispositif d'alimentation en gaz (100) sur une tête d'usinage au laser.

13. Tête d'usinage au laser, incluant :
un dispositif à laser pour fournir un faisceau laser ; et
un dispositif d'alimentation en gaz (100) pour générer un flux de gaz homogène selon l'une des revendications précédentes.

14. Tête d'usinage au laser selon la revendication 13, incluant en outre un élément optique, dans laquelle le volume partagé (120) du dispositif d'alimentation en gaz est agencé entre l'élément optique et un orifice de buse de la tête d'usinage au laser.

15. Tête d'usinage au laser selon la revendication 13 ou 14,
dans laquelle le volume partagé (120) est agencé directement à la suite de l'élément optique et les orifices d'évacuation (132) sont configurés de telle sorte que le flux de gaz s'écoulant à travers les orifices d'évacuation (132) est orienté à un angle compris entre 0° et 90° par rapport à l'élément optique ; et/ou
dans lequel l'entrée de gaz (110) du dispositif d'alimentation en gaz est la seule entrée de gaz pour le gaz de coupe sur la tête d'usinage au laser.
